# EUROPEAN PATENT APPLICATION

(11) **EP 0 577 895 A1**
(43) Date of publication of application: **12.01.1994**
(21) Application number: 92310906.0
(22) Date of filing: 30.11.1992
(51) Int. Cl.: B01D 45/08

(54) **An inertia separation type filter**

(30) Priority: 08.07.1992 JP 203202/92
(71) Applicant: NICOTEC CO., LTD., Tokyo 158 (JP)
(72) Inventor: Obinata, Keiji, Isehara-shi, Kanagawa-ken (JP)
(74) Representative: Leale, Robin George

(57) **Abstract**

Filter elements (1), each of which comprises an elongate rectangular plate member bent substantially along its center line to a V-shape, are arranged in a row at specified intervals. A plurality of rows (N₁ etc.) of filter elements are arranged along a flow passage (2) of a dust-laden fluid at specified intervals. The filters in adjacent rows have their apexes (1a etc.) arranged in opposite directions and staggered laterally.

## Description

The present invention relates to an inertia separation type filter and filter elements used therein to catch and collect dust and dirt from a dust-laden fluid by the collision and inertia dust collecting principle.

Common means of arresting dirt particles from a dust-laden fluid include an electric dust collector, a bag filter and a funnel-shaped filter. The bag filter and funnel-shaped filter have drawbacks of high pressure losses and high power consumed by the suction creating fan.

To solve these problems a multilayer filter of low pressure loss type (simply referred to as an inertia separation type) has been available which utilizes the collision and inertia of dirt particles for collecting dust.

The inertia separation type multilayer filter consists of multiple layers of mesh filter stacked together, each of which is made by pressing a thin metal plate to form a large number of honeycomb-like holes therein. The layers of mesh filter are arranged alternately staggered in direction, say 90 degrees from each other, to change the direction of the dust-laden incoming fluid as it passes through the honeycomb-like holes to produce a revolving flow, in which dust and dirt particles with large inertia collide against each other and settle down to be collected.

In the above conventional inertia separation type filter, however, since the thin metal plate must be pressed to form many honeycomb-shaped holes like a net mesh, the manufacturing process is very complicated. Further, because a plurality of mesh filters are arranged 90 degrees out of phase from each other to change the direction of dust-laden fluid, it is necessary to change the diameter of the honeycomb holes to match that of the dust particles in order to achieve an optimal collision inertia for a particular dust particle size, thus lowering the productivity of the product.

In light of the above-mentioned problems, this invention has been accomplished to provide an inertia separation type filter and its elements which retain the characteristics of the conventional inertia separation filter but in which the filter elements are very simple in structure and the intervals between the filter elements can easily be adjusted according to the diameters of the dust particles.

According to this invention there is provided an inertia separation type filter comprising a multiplicity of filter elements each of which comprises an elongate plate member bent substantially along the center line thereof so as to be substantially V-shaped in transverse cross-section, the filter elements being arranged in rows with gaps between the elements and a plurality of such rows of filter elements being arranged along a flow path of dust-laden fluid at predetermined intervals, the filters in adjacent rows having their apexes pointing in opposite directions, and the apexes of the filters in adjacent rows being mutually staggered in the lateral direction.

Some embodiments of the invention will now be described by way of example and with reference to the accompanying drawings, in which:-
Figure 1 is a perspective view of two similar filter elements used in one embodiment of this invention;
Figure 2 is a plan view showing the outline structure of an inertia separation type filter using the above filter elements;
Figure 3 is an enlarged plan view showing a part of the inertia separation type filter of Figure 2;
Figure 4 is a plan view showing another arrangement of the filter elements in an inertia separation type filter;
Figure 5 is a plan view showing a further arrangement of the filter elements in an inertia separation type filter;
Figure 6 is a graph showing the separation efficiency of the inertial separation type filter; and
Figure 7 is a graph showing the pressure loss of the inertial separation type filter.

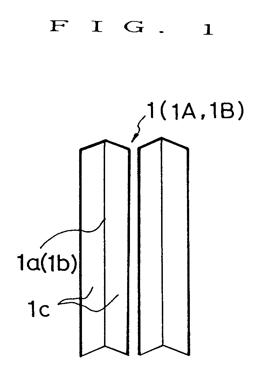

As shown in Figure 1, a filter element 1 consists of an elongate rectangular plate member bent substantially along its center line so as to be of substantially V-shaped transverse cross-section.

The filter element 1 is made of a material best suited for any particular application. For example, in a field where heat resistance and corrosion resistance are required, the filter element may use aluminum alloy or stainless steel.

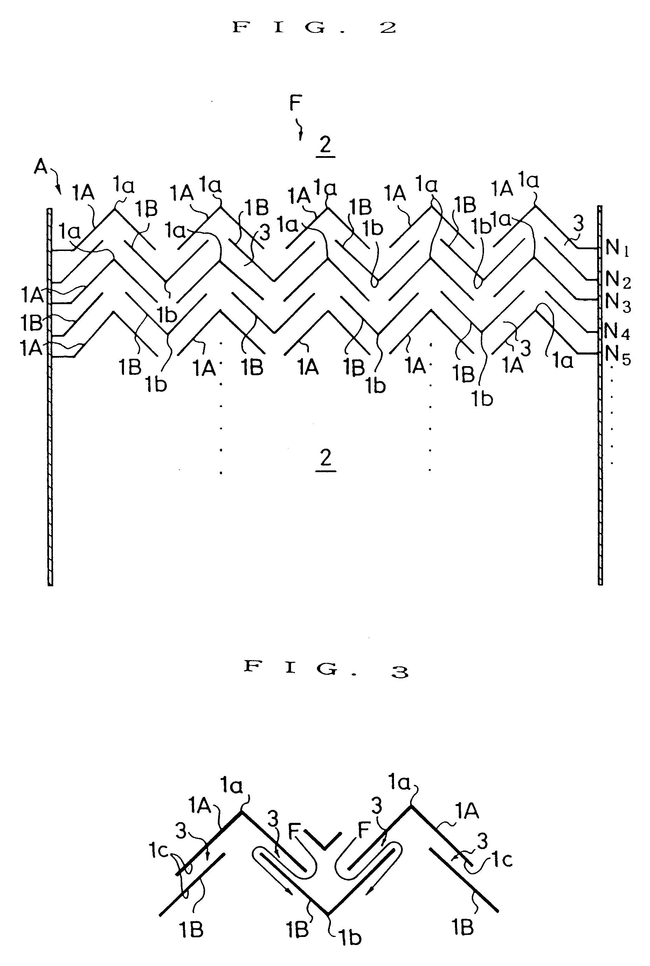

The filter elements ***1*** thus made are arranged as shown in Figure 2 to form an inertia separation type filter ***A***. Although the figure does now show a means to support each filter element ***1***, the same support means as used in the known filters may be employed. For example, a frame that allows adjustment of intervals between filter elements ***1*** may be used to support the filter elements that are removably mounted on the frame.

The inertia separation type filter ***A*** of this embodiment has the filter elements ***1*** arranged in a row with specified intervals therebetween and also has a plurality of rows of filter elements ***1*** arranged one after the other along the passage ***2*** of dust-laden fluid in the order of ***N₁, N₂*****, *N₃*, ..., *N***_{***n-1***}**, *N***_{***n***} (n is an even number) with specified intervals therebetween. The number of rows of the filter elements may also be set to an odd number.

Of the filters arranged in multiple rows, those ***1A*** in odd-numbered rows ***N₁*****, *N₃*, ..., *N***_{***n-1***} and the others ***1B*** in even-numbered rows ***N₂*****, *N₄*, ..., *N***_{***n***} have their bent portions or apexes ***1a***, ***1b*** arranged in opposite directions. It is also noted that the apexes ***1b*** of the filters ***1B*** in the even-numbered rows ***N₂*****, *N₄*, ..., *N***_{***n***} are staggered in lateral direction from the apexes ***1a*** of the filters ***1A*** in the odd-numbered rows ***N₁*****, *N₃*, ..., *N***_{***n-1***}. The filter elements ***1A***, ***1B*** are also arranged so that their sides ***1c***, ***1d*** are almost perpendicular to the direction ***F*** of fluid flow in the passage ***2***.

With the filter elements ***1A***, ***1B*** arranged in multiple rows in this way, S-shaped narrow fluid passages ***3*** are formed on both sides of each filter element as shown in Figure 3. The dust-laden fluid flows downstream along the narrow fluid passages with dirt particles repetitively colliding against each other. The collision among dirt particles is repeated the same number of times as the number of rows of the filter elements, thus efficiently removing dust and dirt particles.

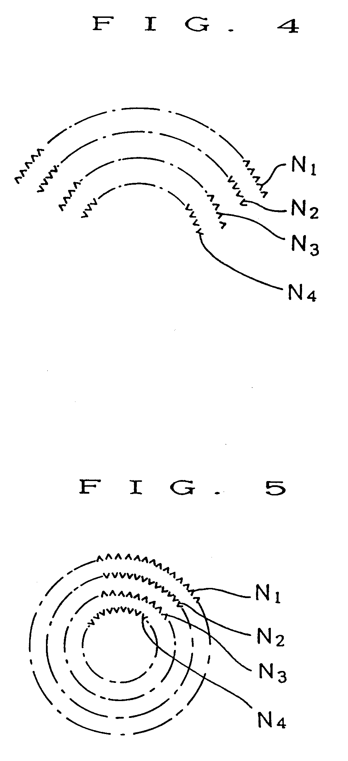

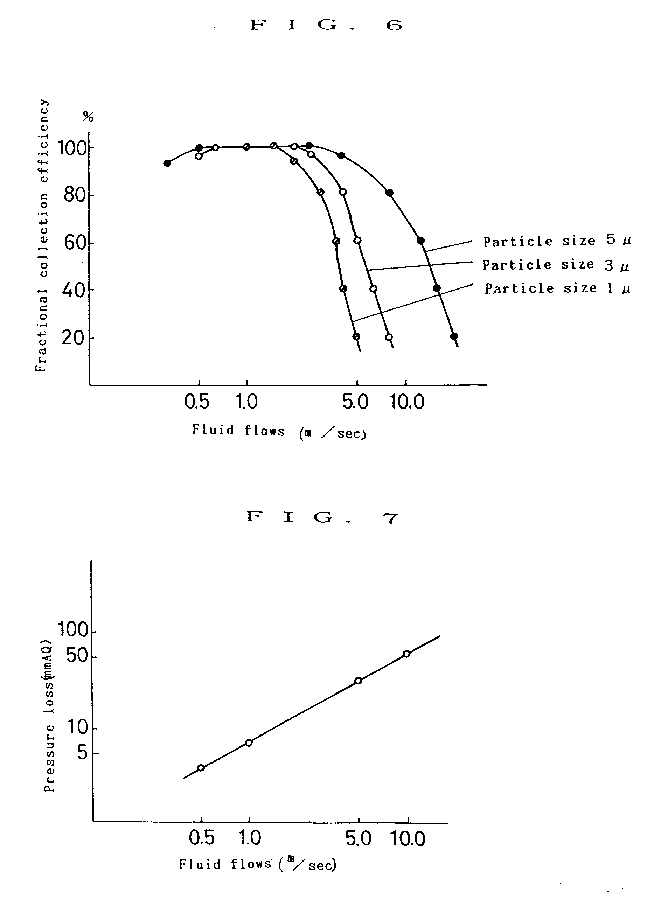

In addition to the linear arrangement of the filter elements ***1A***, ***1B*** as shown in Figure 2, it is possible to arrange them in arcs as shown in Figure 4 or in cylinders one inside the other as shown in Figure 5, according to the shape of filter installation space and the purpose of filter. Though not shown, these filter elements can be arranged otherwise.

While in the above embodiment the rows of the filter elements ***1A***, ***1B*** are spaced at a constant interval, the filter element row intervals may be changed according to the dust particle size or may be progressively narrowed toward downstream.

The filter element ***1*** in this embodiment, which is made of a single plate member bent along the center line, has a very simple construction and thus can reduce the manufacturing cost substantially when compared with the conventional honeycomb-shaped mesh filters. The filter of this construction facilitates dust collection by vibrations, collection of trapped dirt particles by water and water-cleaning of filters.

When the filter elements ***1*** are formed of aluminum alloy or stainless steel, which have excellent heat resistance and corrosion resistance, the filter can be used for dust removing for high-temperature dust-laden gases and corrosive gases and also effectively used for re-burning and deodorizing. Even when a part of the filter is corroded, it is not necessary to replace the entire filter but only the corroded filter elements need be replaced, significantly reducing the maintenance cost.

Since the inertia separation type filter ***A*** employing the above-mentioned filter elements ***1*** depends on the inertia and collision of dust particles for dust collection and separation, the pressure loss is very small as shown in Figure 7. Further, the size of dust that can be caught by this filter is down to 1 µm as shown in Figure 6. When the fluid flows are the same, the filter of this invention has a significantly small initial cost and running cost compared with the bag filter.

Further, the inertia separation type filter ***A*** can employ the same construction for dry dust and wet dust or mist. If the filter elements are made of metal, they can be protected against possible damages or clogging when they get wet. When a wet type dust collecting apparatus is to be made, a water spray may be mounted in front of and above the filter to cleanse the dust particles caught on the filter element surfaces and wash them down the filter surfaces so that the dust can be discharged together with water, thus obviating any special dust particle removing mechanism and ensuring effective dust collection.

The inertia separation type filter and its filter elements can be used for many applications, such as removal of soot and smoke from incinerating furnaces and coal- and oil-fired boilers, removal of nicotine and tar mists, removal of coal dust in desulfurizer towers, removal of oil mist, and treatment of high-temperature exhaust gases. The applications also include sand shot blast dust collectors, fireproof grease filters, ventilation and air conditioning ducts, removal of dust sparks, re-burning apparatuses for human body incinerators, scrap smelting furnaces, sand removal in tunnel work or desert areas, removal of volcanic ash, and eliminators.

As mentioned above, since the filter elements are made very simple in construction, the manufacturing cost can be reduced substantially. Since the inertia separation type filter is formed of a plurality of the simple filter elements, it is possible to adjust the intervals between the filter elements with ease according to the dust particle sizes, assuring a very high dust collecting efficiency. Each filter element is formed of a single independent member and this allows easy replacement of individual filter elements, contributing to a lower replacement cost. Further, the pressure loss in this filter is as low as the electrostatic filter, so that the suction fan can be made smaller than in the mesh type filter for the same air flow, resulting in reduced power consumption and noise. Therefore, the dust collecting apparatus using this filter can greatly reduce the filter cost and fan motor cost.

## Claims

1. An inertia separation type filter comprising a multiplicity of filter elements each of which comprises an elongate plate member bent substantially along the center line thereof so as to be substantially V-shaped in transverse cross-section, the filter elements being arranged in rows with gaps between the elements and a plurality of such rows of filter elements being arranged along a flow path of dust-laden fluid at predetermined intervals, the filters in adjacent rows having their apexes pointing in opposite directions, and the apexes of the filters in adjacent rows being mutually staggered in the lateral direction.
